# EUROPÄISCHE PATENTSCHRIFT

(11) **EP 3 271 590 B1**
(45) Veröffentlichungstag und Bekanntmachung des Hinweises auf die Patenterteilung: **14.08.2019**
(21) Anmeldenummer: 17727091.5
(22) Anmeldetag: 03.04.2017
(51) Int. Cl.: F15B 1/04, F03B 17/00, F03G 3/00, H02J 15/00, F03B 13/06

(54) **VORRICHTUNG ZUM SPEICHERN VON ENERGIE**
DEVICE FOR STORING ENERGY
DISPOSITIF D'ACCUMULATION D'ÉNERGIE

(30) Priorität: 07.04.2016 DE 102016205856
(43) Veröffentlichungstag der Anmeldung: 24.01.2018
(73) Patentinhaber: Delta Energy GmbH&Co. KG 1, 69115 Heidelberg (DE)
(72) Erfinder: PONGRATZ, Stefan, 84130 Dingolfing (DE)
(74) Vertreter: Patent- und Rechtsanwälte Ullrich & Naumann
(86) Internationale Anmeldenummer: PCT/DE2017/200029
(87) Internationale Veröffentlichungsnummer: WO 2017/174081

(56) Entgegenhaltungen:
- DE-A1-102010 034 757
- DE-A1-102011 002 945
- FR-A1- 2 386 709

## Beschreibung

Die vorliegende Erfindung betrifft eine Vorrichtung zum Speichern von Energie.

Aus der Praxis sind sogenannte Pumpspeicherkraftwerke seit Jahren bekannt. Diese dienen zur Zwischenspeicherung von elektrischer Energie, bspw. wenn aufgrund einer zu geringen Nachfrage ein Überangebot an elektrischer Leistung im Stromnetz besteht. Die durch das Pumpspeicherkraftwerk gespeicherte Energie kann in Zeiten erhöhter Nachfrage in das Stromnetz zurück gespeist werden, um somit Nachfragespitzen abzufangen.

Die Funktion eines Pumpspeicherkraftwerks beruht auf der Umwandlung von elektrischer Energie in potentielle Energie von Wasser, indem das Wasser von einem Tiefbecken in ein höher liegendes Speicherbecken herauf gepumpt und somit die potentielle Energie des Wassers erhöht wird. Zur Umwandlung der potentiellen Energie des Wassers in elektrische Energie wird das Wasser von dem Speicherbecken in das tiefer gelegene Tiefbecken abgelassen und treibt dabei eine Turbine an, mittels welcher elektrische Leistung erzeugbar ist. Der Wirkungsgrad eines Pumpspeicherkraftwerks liegt bei ca. 75% bis 80%.

Eine weiteres Beispiel einer Vorrichtung zum Speichern von Energie zeigt WO2011114199.

Bei den bekannten Vorrichtungen zur Speicherung von Energie ist problematisch, dass diese mit einem erheblichen Eingriff in die Umwelt einhergehen. Dies liegt insbesondere daran, dass eine große Menge Wasser zur Speicherung von ausreichend potentieller Energie notwendig ist, so dass die hierzu benötigten Speicherbecken entsprechend groß dimensioniert sein müssen. Des Weiteren sind die Speicherbecken in der Regel betoniert, so dass die Ausbildung eines natürlichen Bewuchses und somit eines Biotops nicht möglich ist. Auch ist problematisch, dass Pumpspeicherkraftwerke nur in Gebieten errichtet werden können, welche die benötigte Topologie, nämlich ein entsprechendes Gefälle zwischen Tiefbecken und Speicherbecken aufweisen.

Der vorliegenden Erfindung liegt daher die Aufgabe zugrunde, eine Vorrichtung zum Speichern von Energie derart auszugestalten und weiterzubilden, dass mit geringem konstruktiven Aufwand, standortunabhängig und ohne spürbare Eingriffe in die Umwelt Energie mit einem möglichst hohen Wirkungsgrad speicherbar ist.

Erfindungsgemäß wird die voranstehende Aufgabe durch die Merkmale des Anspruches 1 gelöst. Danach umfasst die erfindungsgemäße Vorrichtung zum Speichern von Energie eine im Wesentlichen vertikal angeordnete Zylinder-Kolben-Anordnung, wobei der Kolben eine zu hebende Masse darstellt, wobei von einer Pumpeinrichtung Flüssigkeit in den Zylinder unterhalb des Kolbens förderbar ist, um die potentielle Energie der Kolbenmasse durch Anheben des Kolbens zu erhöhen, wobei eine Wandlereinrichtung angeordnet ist, wobei der Wandlereinrichtung bei einem Absenken des Kolbens die im Zylinder befindliche Flüssigkeit zuführbar ist, um zumindest einen Teil der potentiellen Energie der Kolbenmasse in elektrische Energie umzuwandeln.

In erfindungsgemäßer Weise ist zunächst erkannt worden, dass die zugrundeliegende Aufgabe durch die geschickte Ausgestaltung einer vorzugsweise vertikal angeordneten Zylinder-Kolben-Anordnung in verblüffend einfacher Weise gelöst werden kann. Dabei ist von einer Pumpeinrichtung eine Flüssigkeit - bspw. Wasser oder ein Öl - unterhalb des Kolbens in den Zylinder einbringbar, wobei der Kolben die zu hebende Masse darstellt. Durch das Anheben des Kolbens erhöht sich die potentielle Energie der Kolbenmasse, was zur Energiespeicherung genutzt wird. Folglich wird in raffinierter Weise die Kolbenmasse genutzt, um die elektrische Energie als potentielle Energie zu speichern. In weiter erfindungsgemäßer Weise ist dabei erkannt worden, dass die gesamte Vorrichtung extrem klein baut, wenn der Kolben aus einem Material mit einer hohen Dichte hergestellt ist, da nämlich die potentielle Energie proportional zu der angehobenen Masse ist, so dass bereits bei einem relativ geringer Höhenunterschied ausreichend potentielle Energie der Kolbenmasse vorliegt. Es ist somit insbesondere möglich, zumindest den Zylinder unterirdisch anzuordnen, um Eingriffe in die Landschaft auf ein Mindestmaß zu reduzieren. Des Weiteren ist die benötigte Flüssigkeitsmenge gering, so dass das Flüssigkeitsreservoir relativ klein dimensioniert sein kann.

In vorteilhafter Weise besteht der Kolben zumindest teilweise aus einem Abfallstoff bzw. Recyclingstoff. Der Abfallstoff kann dabei mit einem Bindemittel versetzt sein. In idealer Weise kann es sich bei dem Abfallstoff um Schlacke, insbesondere um Stahlschlacke, handeln. Diese kann mit einem Bindemittel versetzt werden und weist sodann eine Dichte von ca. 5000 kg/m³ auf, was in etwa dem Fünffachen der Dichte von Wasser (ca. 1.000 kg/m³) entspricht. Neben der hohen Dichte hat die Schlacke den weiteren Vorteil, dass diese als Abfallstoff preiswert ist und somit die gesamte Vorrichtung günstig in der Herstellung ist.

Um die Konstruktion und somit den Aufbau der Vorrichtung möglichst einfach auszugestalten, kann der Kolben mehrere übereinander angeordnete Segmente aufweisen. Die Segmente können scheibenförmig, insbesondere rund, viereckig, fünfeckig, sechseckig etc., ausgebildet sein. Beispielsweise können die Segmente auch die Form eines Kreisausschnittes, insbesondere eines Halbkreises, aufweisen. In vorteilhafter Weise sind die Segmente voneinander abnehmbar. Dabei ist denkbar, dass die Segmente miteinander korrespondierende Ausnehmungen und Erhebungen aufweisen, so dass die Segmente definiert und sicher aufeinander stapelbar sind. Im Konkreten können die Segmente einen Radius von 5 m bis 25 m, vorzugsweise von 10 m, und/oder jeweils ein Gewicht von 40 t bis 60 t, vorzugsweise von 50 t, aufweisen. Durch die segmentierte Ausgestaltung der Kolbenmasse kann die Vorrichtung mit relativ geringem Aufwand errichtet und gewartet werden.

Um die Handhabung der Segmente zu vereinfachen, können Kopplungsmittel für eine Abhebeeinrichtung - bspw. für einen Kran - ausgebildet sein. Die Kopplungsmittel können insbesondere als mit einem Zapfen versehene kugelförmige Elemente realisiert sein. In vorteilhafter Weise sind an einem Segment mehrere Kopplungsmittel vorgesehen, bspw. mittig sowie in Umfangsrichtung in gleichen Abständen versetzt zueinander im Randbereich der Segmente.

In besonders vorteilhafter Weise können die Segmente in einer Aufnahmeeinrichtung angeordnet sein. Die Aufnahmeeinrichtung kann aus Metall oder einer Metalllegierung, insbesondere aus Stahl, hergestellt sein und/oder als Hohlzylinder realisiert sein, wobei eine Grundfläche des Hohlzylinders geschlossen ausgebildet sein kann. Weiterhin können in und/oder an der Aufnahmeeinrichtung Führungselemente vorgesehen sein, wobei die Führungselemente in korrespondierende Materialausnehmungen der Segmente eingreifen. Dadurch ist ein Verrutschen der Segmente innerhalt der Aufnahmeeinrichtung in effektiver Weise vermieden.

Des Weiteren ist denkbar, dass zwischen dem Zylinder und der Pumpeinrichtung eine erste Leitung realisiert ist und dass zwischen Zylinder und Wandlereinrichtung eine zweite Leitung angeordnet ist. In bevorzugter Weise können die separaten Leitungen miteinander - mittelbar oder unmittelbar - kommunizieren, so dass die Vorrichtung nach dem Prinzip des hydraulischen Kurzschlusses betreibbar ist. Des Weiteren ist denkbar, dass die Pumpeinrichtung und die Wandlereinrichtung über die gleiche Leitung mit dem Zylinder verbunden sind. Bei den voranstehend genannten Leitungen kann es sich bspw. um Druckrohrleitungen handeln.

Alternativ oder zusätzlich zur Einspeisung von elektrischer Energie über ein Stromnetz kann zumindest eine Anlage zur Energiegewinnung angeordnet sein, um die Pumpeinrichtung mit Energie zu versorgen. Dabei kann es sich insbesondere um ein Blockheizkraftwerk, eine Solarstromanlage und/oder eine Windkraftanlage handeln. Die Anordnung eines Blockheizkraftwerks hat den weiteren Vorteil, dass die Flüssigkeit über die Abwärme des Blockheizkraftwerks erwärmbar ist, so dass neben der potentiellen Energie der Kolbenmasse auch die thermische Energie der Flüssigkeit als "Energiespeicher" verwendbar ist. Insbesondere ist denkbar, dass die Flüssigkeit bspw. über einen Wärmetauscher erhitzbar sein kann.

Eine besonders einfache Realisierung des Zylinders ist möglich, wenn dieser aus Metall oder einer Metalllegierung besteht. Dabei kann es sich in bevorzugter Weise um Stahl handeln. Zur Gewährleistung der benötigten Stabilität der Konstruktion kann der Metallzylinder zumindest teilweise mit Beton ummantelt sein. In idealer Weise kann der Metallzylinder über seine gesamte Länge hinweg mit Beton ummantelt sein. Alternativ oder zusätzlich kann die Betonummantelung am unteren Ende des Zylinders in eine zumindest nahezu horizontal verlaufende Betonplatte übergehen, insbesondere einteilig mit dieser ausgestaltet sein.

In weiter vorteilhafter Weise kann ein System aus mehreren erfindungsgemäßen Vorrichtungen realisiert sein. Insbesondere kann ein redundantes Mehrfachsystem realisiert werden, so dass bei einer Wartung oder einem Defekt an einem der Bestandteile einer der Vorrichtungen die übrigen Vorrichtungen den Ausfall kompensieren.

Des Weiteren kann unterhalb eines Zylinderbodens ein Aufnahmebereich für eine Flüssigkeit ausgebildet sein, wobei der Zylinderboden mehrere Durchgänge aufweist, so dass Flüssigkeit von dem Aufnahmebereich in den Zylinder unterhalb des Kolbens förderbar ist, um die potentielle Energie der Kolbenmasse durch ein Anheben des Kolben zu erhöhen. Dies hat den Vorteil, dass aufgrund der Durchgänge in dem Zylinderboden mit konstruktiv einfachen Mitteln ein Strömungspfad definiert ist, der gewährleistet, dass eine ausreichende Menge von Flüssigkeit in einem definierten Zeitraum und unter einem definierten Druck in den Zylinder einbringbar ist.

Insbesondere ist denkbar, dass der Kolben in seiner Grundposition auf dem Zylinderboden aufliegt. Dabei bieten die Durchgänge der Flüssigkeit eine große Fläche, um auf den Kolben einzuwirken, so dass ein relativ geringer Druck ausreicht, um den Kolben aus der Grundposition heraus anzuheben. Somit werden Druckspitzen, welche beim Anheben des Kolbens bei einer solchen Grundposition auftreten, effektiv vermindert.

In vorteilhafter Weise kann 60% bis 80%, insbesondere 65% bis 75%, vorzugsweise 70%, der Fläche des Zylinderbodens mit Durchgängen versehen sein. Dadurch ist ein optimaler Strömungspfad für die Flüssigkeit definiert.

In weiter vorteilhafte Weise kann der Aufnahmebereich schalenförmig, insbesondere als Abschnitt bzw. Kappe eines Ellipsoids oder einer Hohlkugel, ausgebildet sein. Bei einer solchen Ausgestaltung definieren der Aufnahmebereich und der Zylinderboden ein Druckgehäuse, wobei der Zylinderboden als Gehäusedeckel wirkt. Somit ist zunächst der schalenförmige Bereich mit Flüssigkeit befüllbar, wobei die Durchgänge des Zylinderbodens in idealer Weise einen Strömungspfad zwischen dem Aufnahmebereich und dem Zylinder definieren. Zur Realisierung einer ausreichend stabilen Konstruktion kann zumindest ein sich von dem Aufnahmebereich zu dem Zylinderboden erstreckendes Stützelement angeordnet sein. Weiterhin ist denkbar, dass mehrere Stützelemente vorgesehen sind. Im Konkreten kann das Stützelement bzw. können die Stützelemente als Stützwand und/oder Stützstrebe realisiert sein.

Um zu gewährleisten, dass der insbesondere schalenförmig ausgebildete Aufnahmebereich insgesamt mit Flüssigkeit befüllbar ist, kann an dem Stützelement bzw. an den Stützelementen zumindest jeweils ein Durchgang ausgebildet sein. Der Durchgang kann dabei kreisförmig, ellipsenförmig und/oder bogenförmig realisiert sein. Eine bogenförmige Ausgestaltung der Durchgänge hat den Vorteil, dass die Stützelemente äußerst Stabil realisiert sind.

Damit nicht ausschließlich potentielle Energie, sondern auch thermischer Energie speicherbar ist, kann an dem Aufnahmebereich und/oder an dem Zylinderboden eine Heizeinrichtung ausgebildet sein. Bei der Heizeinrichtung kann es sich um einen Wärmetauscher handeln, beispielsweise um eine Leitung, die mit einer erwärmten Flüssigkeit beaufschlagbar ist. Des Weiteren ist denkbar, dass die Heizeinrichtung als Heizwendel ausgestaltet ist.

Zur Vereinfachung der Wartungsarbeiten kann an dem Aufnahmebereich und/oder an dem Zylinderboden eine verschließbare Revisionsöffnung ausgebildet sein. Die Revisionsöffnung kann beispielsweise als Mannloch realisiert sein.

In vorteilhafter Weise sind der Aufnahmebereich und der Zylinderboden aus Metall oder einer Metalllegierung, beispielsweise aus Stahl, hergestellt. Dadurch ist die Vorrichtung einfach zu fertigen und weist eine hohe Stabilität auf. Auch können der Aufnahmebereich und der Zylinderboden einteilig ausgebildet sein.

Des Weiteren ist denkbar, dass an dem Aufnahmebereich ein einzelner Zu-/Ablauf vorgesehen ist. Alternativ können ein separater Zulauf und ein separater Ablauf vorgesehen sein, so dass eine entsprechend realisierte Anordnung nach dem Prinzip des hydraulischen Kurzschlusses betreibbar ist.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen, perspektivischen Darstellung ein Ausführungsbeispiel einer erfindungsgemäßen Vorrichtung,
- Fig. 2: in einer schematischen, geschnittenen Darstellung einen vergrößerten Ausschnitt des Ausführungsbeispiels gemäß Fig. 1,
- Fig. 3: in einer schematischen, geschnittenen Darstellung einen vergrößerten Ausschnitt des Ausführungsbeispiels gemäß Fig. 1,
- Fig. 4: in einer schematischen, perspektivischen Darstellung einen Zylinder einer erfindungsgemäßen Vorrichtung,
- Fig. 5: in einer schematischen, perspektivischen Darstellung einen Kolben einer erfindungsgemäßen Vorrichtung,
- Fig. 6: in einer schematischen, geschnittenen Darstellung den Kolben gemäß Fig. 5,
- Fig. 7: in einer schematischen, geschnittenen Darstellung die Aufnahmeeinrichtung des Kolbens gemäß Fig. 5,
- Fig. 8: in einer schematischen, perspektivischen Darstellung ein Segment des Kolbens einer erfindungsgemäßen Vorrichtung,
- Fig. 9: in einer schematischen, perspektivischen Darstellung den Zylinderboden einer erfindungsgemäßen Vorrichtung,
- Fig. 10: in einer schematischen, geschnittenen Darstellung den Zylinderboden gemäß Fig. 10 und
- Fig. 11: in einer weiteren schematischen, geschnittenen Darstellung den Zylinderboden gemäß Fig. 10.

An dieser Stelle sei zunächst darauf hingewiesen, dass zur besseren Darstellung in einzelnen Figuren mehrfach vorhandene Elemente - bspw. Segmente, Durchgänge etc. - teilweise nicht mit einem Bezugszeichen versehen sind.

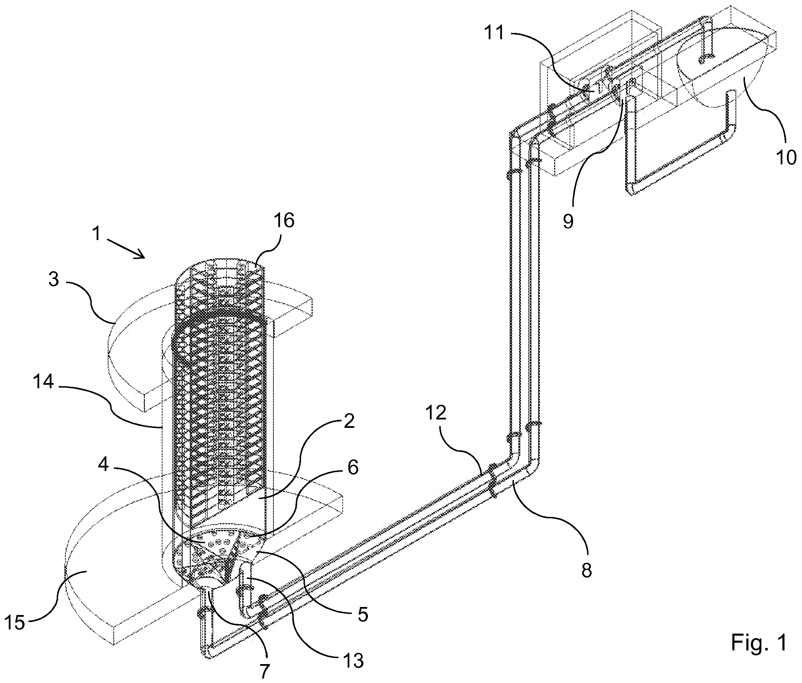

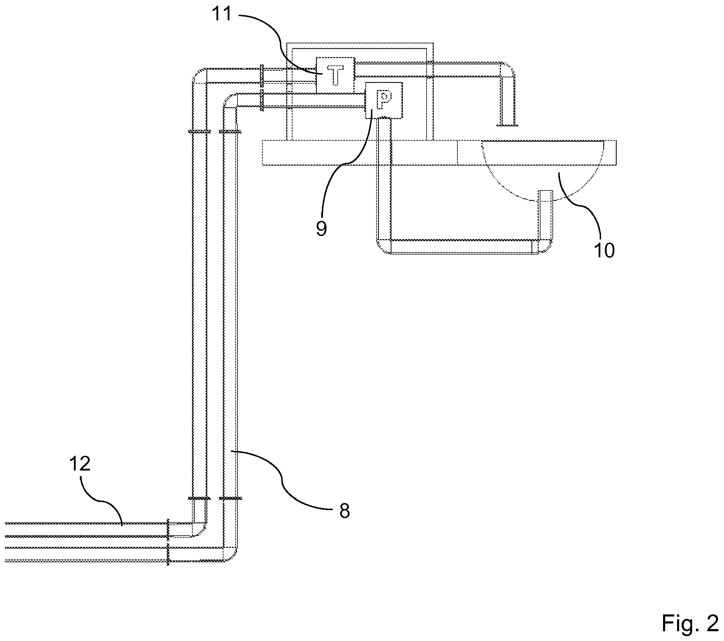

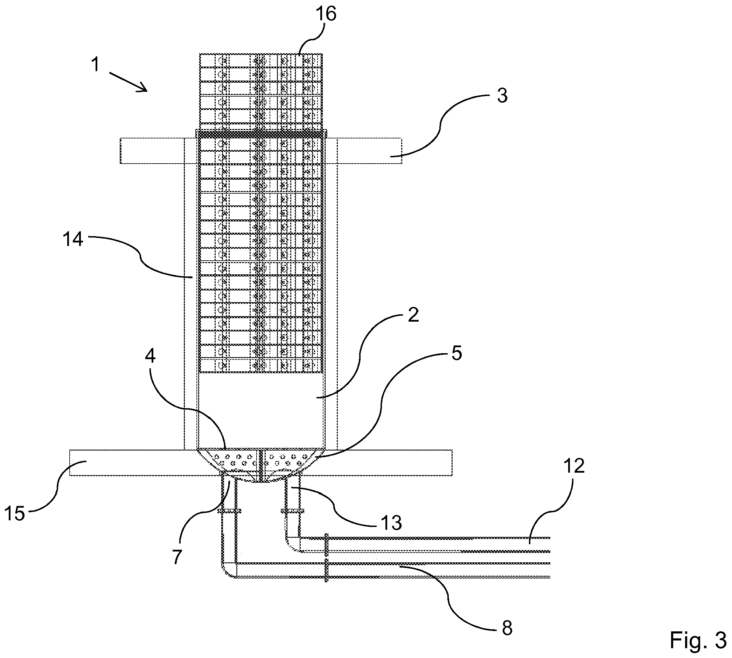

Die Figuren 1 bis 3 zeigen in verschiedenen, schematischen Darstellungen ein Ausführungsbeispiel einer erfindungsgemäßen Vorrichtung zum Speichern von Energie. Die Vorrichtung umfasst einen Kolben 1, der innerhalb eines vertikal angeordneten Zylinders 2 vorgesehen ist. Der Zylinder 2 ist in diesem Ausführungsbeispiel unterhalb der Erdoberfläche 3 realisiert und weist einen Zylinderboden 4 auf. Unterhalb des Zylinderbodens 4 ist ein Aufnahmebereich 5 vorgesehen. Des Weiteren sind in dem Zylinderboden 4 mehrere Durchgänge 6 ausgebildet, so dass eine Flüssigkeit von dem Aufnahmebereich 5 über die Durchgänge 6 in den Zylinder 2 unterhalb des Kolbens 1 förderbar ist. Somit ist der Kolben 1 anhebbar, nämlich zur Erhöhung der potentiellen Energie der Kolbenmasse.

Im hier dargestellten Ausführungsbeispiel ist der Aufnahmebereich 5 schalenförmig ausgebildet und wirkt der Zylinderboden 4 als Deckel für den Aufnahmebereich 5.

An dem Aufnahmebereich 5 ist weiterhin ein Zulauf 7 vorgesehen, der über eine erste Leitung 8 mit einer Pumpeinrichtung 9 verbunden ist. Die erste Leitung 8 bzw. der Zulauf 7 sind über ein nicht dargestelltes Ventil verschließbar. Über die Pumpeinrichtung 9 kann dem Aufnahmebereich 5 und somit auch dem Zylinder 2 aus einem Reservoir 10 eine Flüssigkeit - bspw. Wasser oder ein Öl - zugeführt werden.

Des Weiteren ist eine Wandlereinrichtung 11 über eine zweite Leitung 12 mit einem Ablauf 13 des Aufnahmebereichs 5 verbunden. Die zweite Leitung 12 kann ebenfalls über ein nicht dargestelltes Ventil verschlossen werden.

Um elektrische Energie zu speichern wird der Pumpeinrichtung 9 die zu speichernden elektrische Energie zur Verfügung gestellt und somit Flüssigkeit aus dem Reservoir 10 über die erste Leitung 8 in den Aufnahmebereich 5 eingebracht. Von dem Aufnahmebereich 5 strömt die Flüssigkeit über die Durchgänge 6 unterhalb des Kolbens 1 in den Zylinder 2. Die zweite Leitung 12 ist dabei verschlossen, so dass der Kolben 1 durch die einströmende Flüssigkeit angehoben wird und sich die potentielle Energie der Kolbenmasse proportional zu der Höhendifferenz erhöht. Sobald der Kolben 1 die gewünschte Höhe erreicht hat, kann die erste Leitung 8 mittels eines Ventils verschlossen werden. Um die potentielle Energie der Kolbenmasse wieder in elektrische Energie zu überführen, wird die zweite Leitung 12 geöffnet, so dass sich der Kolben 1 absenkt und die Flüssigkeit über die zweite Leitung 12 zu der Wandlereinrichtung 11 - beispielsweise eine Turbine - presst. Über die Flüssigkeit wird die Wandlereinrichtung 11 angetrieben und erzeugt elektrische Energie, die dem Netz oder einem Verbraucher zur Verfügung gestellt werden kann.

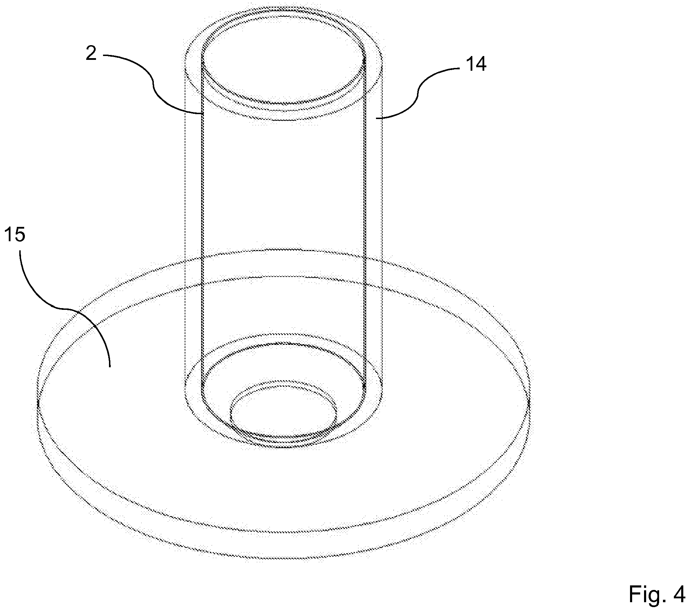

Figur 4 zeigt in einer schematischen, perspektivischen Darstellung einen Zylinder 2 einer erfindungsgemäßen Vorrichtung. Der Zylinder 2 ist insbesondere aus Stahl hergestellt und über seine gesamte Länge hinweg mit einer Betonummantelung 14 versehen. Am unteren Ende des Zylinders 2 geht die Betonummantelung 14 in eine (Beton-)Platte 15 über, so dass der Zylinder 2 sicher fixiert ist. Des Weiteren läuft die Betonummantelung 14 unterhalb des Zylinders 2 konisch zu, um nämlich den schalenförmigen Aufnahmebereich 5 aufzunehmen.

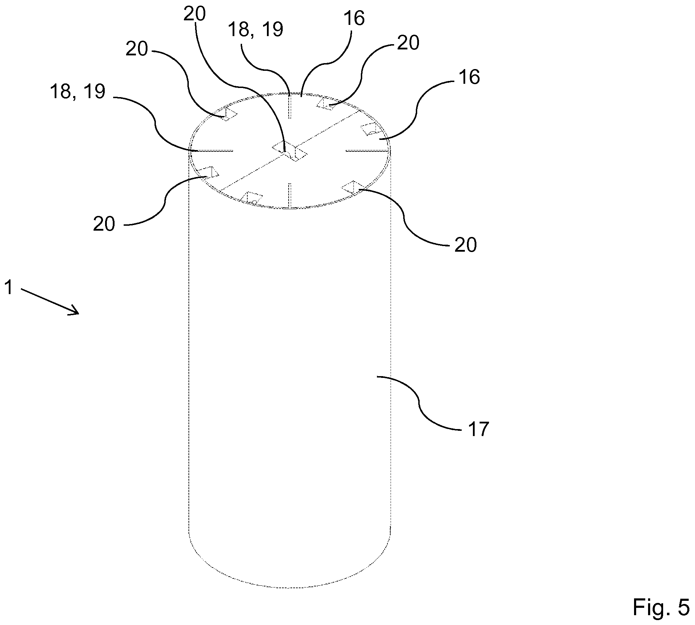

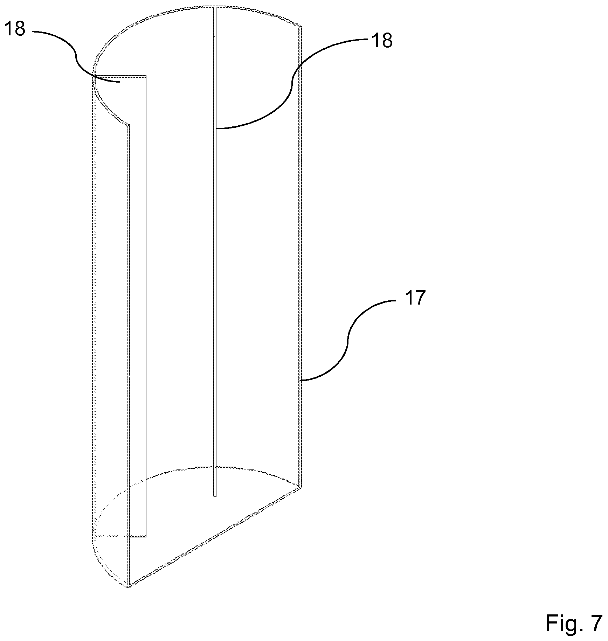

Die Figuren 5 bis 7 zeigen den Kolben 1 einer erfindungsgemäßen Vorrichtung in verschiedenen Ansichten. Dabei ist deutlich zu erkennen, dass der Kolben 1 aus mehreren, übereinander bzw. nebeneinander angeordneten Segmenten 16 aufgebaut ist, die innerhalb einer Aufnahmeeinheit 17 angeordnet sind. Die Segmente 16 sind dabei halbkreisförmig ausgebildet, so dass jeweils zwei Segmente 16 innerhalb der Aufnahmeeinrichtung 17 nebeneinander angeordnet sind und einen Kreis bilden. In besonders vorteilhafter Weise können die Aufnahmeeinheit 17 und der Zylinder 2 aus Stahl hergestellt sein. Die Aufnahmeeinheit 17 ist als Hohlzylinder ausgebildet, wobei das untere Ende der Aufnahmeeinheit 17 geschlossen ist. Des Weiteren sind an der Aufnahmeeinheit 17 Führungselemente 18 ausgebildet, die in korrespondierende Materialausnehmungen 19 der Segmente 16 eingreifen. Die Segmente 16 sind aus einem mit Bindemittel versetzten Abfallstoff, vorzugsweise aus Stahlschlacke, hergestellt.

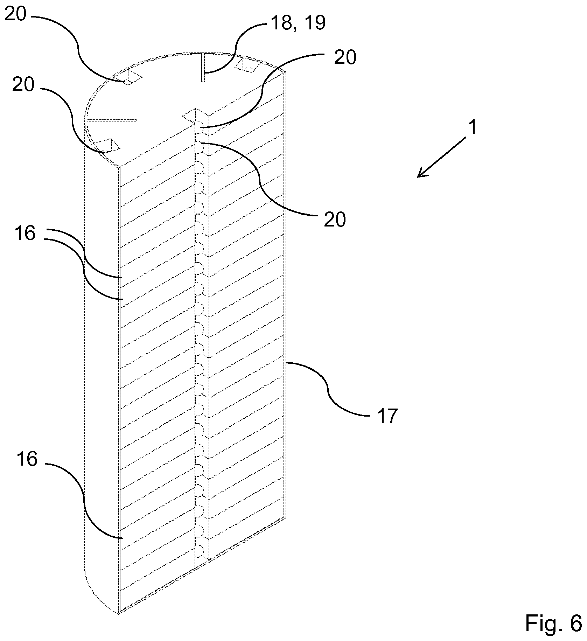

Insbesondere aus den Figuren 5 und 6 geht deutlich hervor, dass die Segmente 16 insgesamt vier Kopplungsmittel 20 für eine Abhebeeinrichtung, bspw. einen Kran, aufweisen. Die Kopplungsmittel 20 sind in dieser Ausführungsform als Kugelzapfen realisiert.

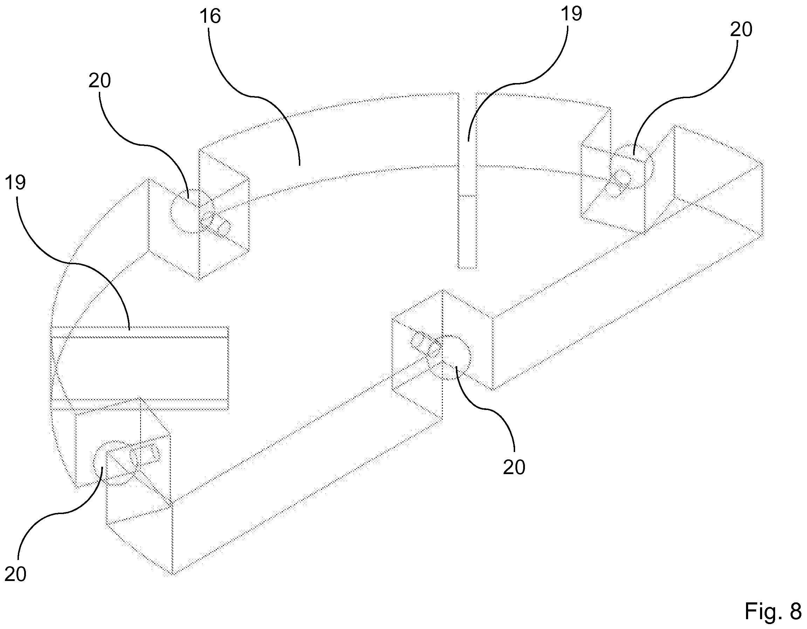

Figur 8 zeigt in einer schematischen Darstellung ein Segment 16 des Kolbens 1 einer erfindungsgemäßen Vorrichtung. Dabei ist nochmals dargestellt, dass das Segment 16 als im Wesentlichen halbkreisförmige Scheibe realisiert ist. Des Weiteren sind die Kopplungsmittel 20 sowie die Materialausnehmungen 19 gezeigt. Das Segment 16 zeichnet sich dadurch aus, dass es aus einem Material mit sehr hoher Dichte hergestellt ist, insbesondere aus mit Bindemittel versetzter Stahlschlacke.

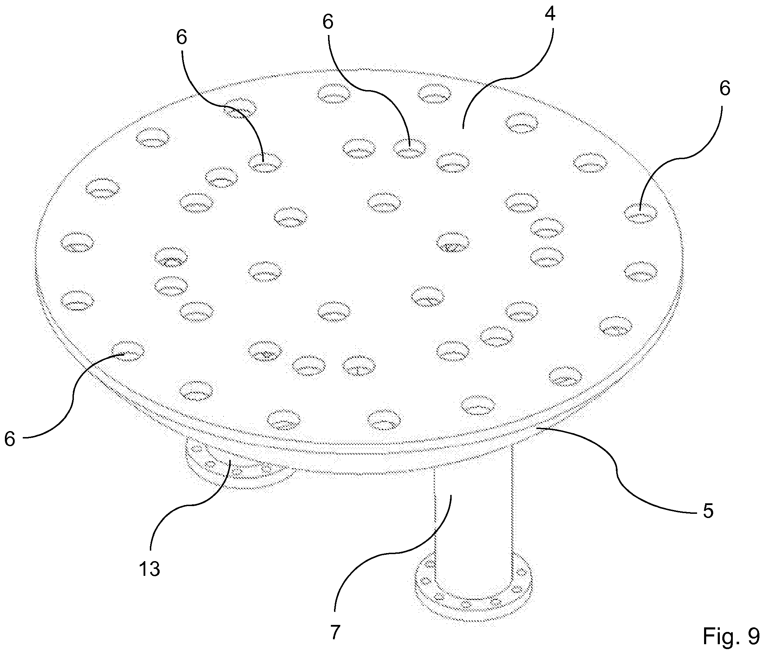

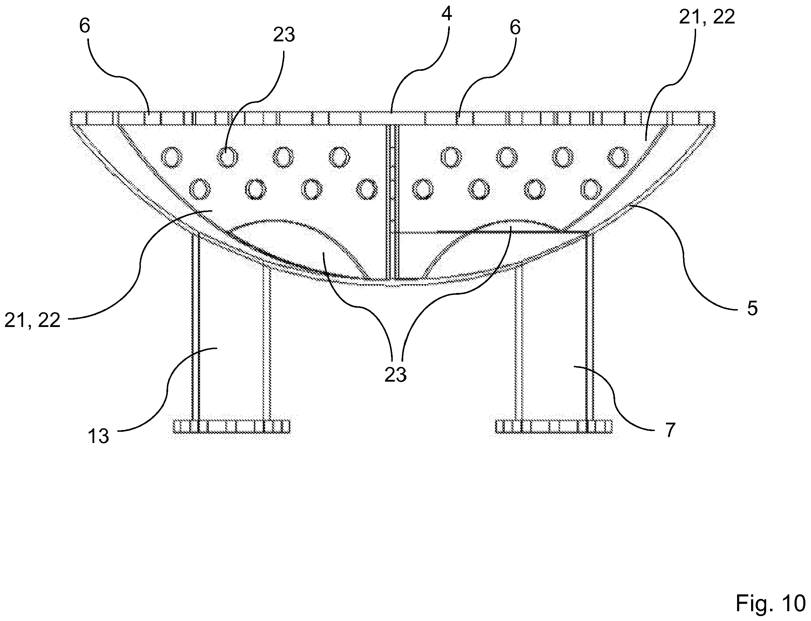

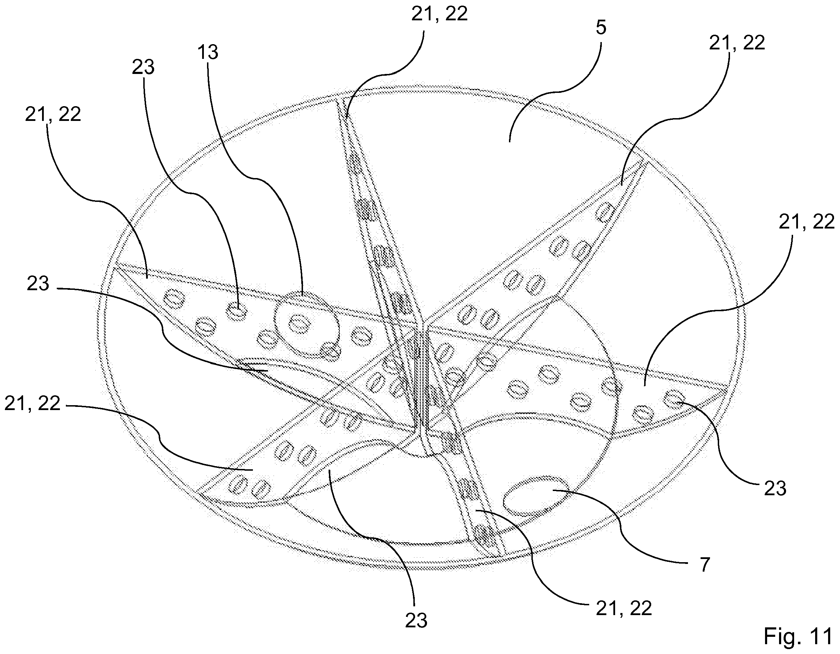

Die Figuren 9 bis 11 zeigen den Zylinderboden 4 einer erfindungsgemäßen Vorrichtung. Dabei ist deutlich zu erkennen, dass in dem Zylinderboden 4 mehrere Durchgänge 6 vorgesehen sind. In besonders bevorzugter Weise sind 70% der Fläche des Zylinderbodens 4 mit Durchgängen 6 versehen. Der Aufnahmebereich 5 ist schalenförmig ausgebildet und umfasst den Zulauf 7 und den Ablauf 13.

Zwischen dem Aufnahmebereich 5 und dem Zylinderboden 4 erstrecken sich Stützelemente 21, die als Stützwände 22 ausgebildet sind. In den Stützwänden 22 sind kreisförmige und bogenförmige Durchgänge 23 angeordnet, so dass die Flüssigkeit in die gesamte Begrenzungseinrichtung 3 eindringen kann. Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Kolben
- 2: Zylinder
- 3: Erdoberfläche
- 4: Zylinderboden
- 5: Aufnahmebereich
- 6: Durchgang (Zylinderboden)
- 7: Zulauf
- 8: erste Leitung
- 9: Pumpeinrichtung
- 10: Reservoir
- 11: Wandlereinrichtung
- 12: zweite Leitung
- 13: Ablauf
- 14: Betonummantelung
- 15: Platte
- 16: Segment
- 17: Aufnahmeeinheit
- 18: Führungselement
- 19: Materialausnehmung
- 20: Kopplungsmittel
- 21: Stützelement
- 22: Stützwand
- 23: Durchgang (Stützelement)

## Patentansprüche

1. Vorrichtung zum Speichern von Energie, mit einer im Wesentlichen vertikal angeordneten Zylinder-Kolben-Anordnung, wobei der Kolben (1) eine zu hebende Masse darstellt, wobei von einer Pumpeinrichtung (9) Flüssigkeit in den Zylinder (2) unterhalb des Kolbens (1) förderbar ist, um die potentielle Energie der Kolbenmasse durch Anheben des Kolbens (1) zu erhöhen, wobei eine Wandlereinrichtung (11) angeordnet ist, wobei der Wandlereinrichtung (11) bei einem Absenken des Kolbens (1) die im Zylinder (2) befindliche Flüssigkeit zuführbar ist, um zumindest einen Teil der potentiellen Energie der Kolbenmasse in elektrische Energie umzuwandeln **dadurch gekennzeichnet, dass** der Kolben (1) mehrere übereinander und/oder nebeneinander angeordnete Segmente (16) aufweist.

2. Vorrichtung nach Anspruch 1, **dadurch gekennzeichnet, dass** der Kolben (1) zumindest teilweise aus einem Abfallstoff besteht.

3. Vorrichtung nach Anspruch 2, **dadurch gekennzeichnet, dass** dem Abfallstoff ein Bindemittel zugesetzt ist.

4. Vorrichtung nach Anspruch 2 oder 3, **dadurch gekennzeichnet, dass** es sich bei dem Abfallstoff um Schlacke, insbesondere um Stahlschlacke, handelt.

5. Vorrichtung nach einem der Ansprüche 1 bis 4, **dadurch gekennzeichnet, dass** die Segmente (16) scheibenförmig ausgebildet sind.

6. Vorrichtung nach Anspruch 5, **dadurch gekennzeichnet, dass** die Segmente (16) voneinander abnehmbar ausgestaltet sind.

7. Vorrichtung nach Anspruch 5 oder 6, **dadurch gekennzeichnet, dass** die Segmente (16) Kopplungsmittel (20) für eine Abhebeeinrichtung, beispielsweise einen Kran, aufweisen.

8. Vorrichtung nach einem der Ansprüche 1 bis 7, **dadurch gekennzeichnet, dass** die Segmente (16) in einer Aufnahmeeinheit (17) angeordnet sind.

9. Vorrichtung nach einem der Ansprüche 1 bis 8, **dadurch gekennzeichnet, dass** zwischen dem Zylinder (2) und der Pumpeinrichtung (9) eine erste Leitung (8) angeordnet ist und dass zwischen dem Zylinder (2) und der Wandlereinrichtung (11) eine zweite Leitung (12) angeordnet ist.

10. Vorrichtung nach einem der Ansprüche 1 bis 9, **dadurch gekennzeichnet, dass** eine Anlage zu Energiegewinnung, insbesondere ein Blockheizkraftwerk, eine Solarstromanlage und/oder eine Windkraftanlage, angeordnet ist, um die Pumpeinrichtung (9) mit Energie zu versorgen.

11. Vorrichtung nach einem der Ansprüche 1 bis 10, **dadurch gekennzeichnet, dass** zum Erwärmen der Flüssigkeit ein Wärmetauscher angeordnet ist.

12. Vorrichtung nach einem der Ansprüche 1 bis 11, **dadurch gekennzeichnet, dass** der Zylinder (2) aus Metall oder einer Metalllegierung, insbesondere aus Stahl, ausgebildet ist und/oder zumindest teilweise mit Beton ummantelt ist.

## Claims

1. Device for storing energy, having a substantially vertically arranged cylinder/piston arrangement, wherein the piston (1) constitutes a mass which is intended to be lifted, wherein fluid can be conveyed by a pumping device (9) into the cylinder (2) below the piston (1) in order to increase the potential energy of the piston mass by raising the piston (1), wherein a converter device (11) is arranged, wherein fluid which is located in the cylinder (2) can be supplied to the converter device (11) when the piston (1) is lowered in order to convert at least a portion of the potential energy of the piston mass into electrical energy, **characterised in that** the piston (1) has a plurality of segments which are arranged one above the other and/or beside each other.

2. Device according to claim 1, **characterised in that** the piston (1) at least partially comprises a waste material.

3. Device according to claim 2, **characterised in that** a binding agent is added to the waste material.

4. Device according to claim 2 or claim 3, **characterised in that** the waste material is slag, in particular steel slag.

5. Device according to any one of claims 1 to 4, **characterised in that** the segments (16) are constructed in a disc-like manner.

6. Device according to claim 5, **characterised in that** the segments (16) are constructed so as to be able to be removed from each other.

7. Device according to claim 5 or claim 6, **characterised in that** the segments (16) have coupling means (20) for a lifting device, for example, a crane.

8. Device according to any one of claims 1 to 7, **characterised in that** the segments (16) are arranged in a receiving unit (17).

9. Device according to any one of claims 1 to 8, **characterised in that** a first line (8) is arranged between the cylinder (2) and the pumping device (9) and a second line (12) is arranged between the cylinder (2) and the converter device (11).

10. Device according to any one of claims 1 to 9, **characterised in that** an installation for energy recovery, in particular a cogeneration unit, a solar power installation and/or a wind turbine, is arranged in order to provide the pumping device (9) with energy.

11. Device according to any one of claims 1 to 10, **characterised in that** a heat exchanger is arranged in order to heat the fluid.

12. Device according to any one of claims 1 to 11, **characterised in that** the cylinder (2) is constructed from metal or a metal alloy, in particular from steel, and/or is at least partially encased in concrete.

## Revendications

1. Dispositif d'accumulation d'énergie, avec une disposition cylindre-piston disposée globalement verticalement, le piston (1) constituant une masse à soulever, un liuquide pouvant être transporté par un dispositif de pompage (9) dans le cylindre (2) en dessous du piston (1), afin d'augmenter l'énergie potentielle de la masse du piston par le soulèvement du piston (1), un dispositif convertisseur (11) étant disposé, le liquide se trouvant dans le cylindre (2) pouvant être introduit dans le dispositif convertisseur (11) lors d'un abaissement du piston (1), afin de convertir au moins une partie de l'énergie potentielle de la masse du piston en énergie électrique, **caractérisé en ce que** le piston (1) comprend plusieurs segments superposés et/ou juxtaposés (16).

2. Dispositif selon la revendication 1, **caractérisé en ce que** le piston (1) est constitué au moins partiellement d'un matériau de rebut.

3. Dispositif selon la revendication 2, **caractérisé en ce qu'**au matériau de rebut est ajouté un liant.

4. Dispositif selon la revendication 2 ou 3, **caractérisé en ce que** le matériau de rebut est un mâchefer, plus particulièrement un mâchefer d'acier.

5. Dispositif selon l'une des revendications 1 à 4, **caractérisé en ce que** les segments (16) présentent la forme de disques.

6. Dispositif selon la revendication 5, **caractérisé en ce que** les segments (16) sont conçus de façon à pouvant être détachés les uns des autres.

7. Dispositif selon la revendication 5 ou 6, **caractérisé en ce que** les segments (16) comprennent des moyens de couplage (20) pour un dispositif de levage, par exemple une grue.

8. Dispositif selon l'une des revendications 1 à 7, **caractérisé en ce que** les segments (16) sont disposés dans une unité de logement (17).

9. Dispositif selon l'une des revendications 1 à 8, **caractérisé en ce que**, entre le cylindre (2) et le dispositif de pompage (9), est disposée une première conduite (8) et **en ce que**, entre le cylindre (2) et le dispositif convertisseur (11), est disposée une deuxième conduite (12).

10. Dispositif selon l'une des revendications 1 à 9, **caractérisé en ce qu'**une installation de production d'énergie, plus particulièrement une centrale de cogénération, une installation photovoltaïque et/ou une éolienne, est prévue afin d'alimenter le dispositif de pompage (9) en énergie.

11. Dispositif selon l'une des revendications 1 à 10, **caractérisé en ce que**, pour le chauffage du liquide, un échangeur thermique est prévu.

12. Dispositif selon l'une des revendications 1 à 10, **caractérisé en ce que** le cylindre (2) est constitué de métal ou d'un alliage métallique, plus particulièrement d'acier, et/ou en entourée au moins partiellement de béton.
